# FASCICULE DE BREVET EUROPEEN

(11) **EP 4 188 756 B1**
(45) Date de publication et mention de la délivrance du brevet: **07.08.2024**
(21) Numéro de dépôt: 21740103.3
(22) Date de dépôt: 13.07.2021
(51) Int. Cl.: B60S 1/34

(54) **ATTACHE POUR FIXATION D'UNE CONDUITE FLUIDIQUE SUR UN BRAS**
CLIP ZUR BEFESTIGUNG EINER FLÜSSIGKEITSLEITUNG AN EINEM WISCHERARM
CLIP FOR FIXING A FLUID PIPE TO A WIPER ARM

(30) Priorité: 27.07.2020 FR 2007900
(43) Date de publication de la demande: 07.06.2023
(73) Titulaire: Valeo Systèmes d'Essuyage, 78322 le Mesnil Saint Denis (FR)
(72) Inventeur: GIRODOT, Cyrille, 78321 LE MESNIL SAINT DENIS (FR); KUCHLY, Nicolas, 78321 Le Mesnil - Saint Denis (FR); FAURIOL, Quentin, 78321 LE MESNIL SAINT DENIS (FR)
(74) Mandataire: Valeo Visibility
(86) Numéro de dépôt international: PCT/EP2021/069536
(87) Numéro de publication internationale: WO 2022/023031

(56) Documents cités:
- EP-A1- 2 813 402
- EP-A1- 3 415 380
- DE-A1- 102014 214 109
- DE-A1- 102015 224 620
- FR-A1- 2 758 781
- JP-A- 2006 007 971
- US-B2- 10 125 897

## Description

La présente invention concerne le domaine des systèmes de projection de liquide nettoyant des véhicules automobiles et en particulier les systèmes de lavage comprenant des buses de projection au niveau des bras d'essuyage sur lesquels sont disposés les balais d'essuyage, et/ou sur les balais d'essuyage eux-mêmes.

La projection de liquide de nettoyage au niveau des bras et/ou balais d'essuyage implique l'acheminement du liquide de nettoyage jusqu'aux buses de projection. Cet acheminement est réalisé par des conduites aussi appelées durites à l'intérieur desquelles circulent le liquide de lavage. La propulsion du liquide de nettoyage dans les conduites est par exemple réalisée par une pompe du système d'essuyage configurée pour pomper le liquide de nettoyage depuis un réservoir jusqu'aux buses de projection.

Les conduites doivent ainsi être fixées aux bras d'essuyage. Pour cela, il existe des attaches qui peuvent être disposées régulièrement le long de la conduite et du bras d'essuyage. Cependant, les attaches de l'état de la technique présentent souvent certains inconvénients comme un montage délicat et/ou nécessitant un temps important, une gêne de la conduite lors du montage sur le bras d'essuyage. Le document EP 3 415 380 A1 montre une attache pour fixer une conduite fluidique sur un bras d'essuyage selon le préambule de la première revendication.

Il convient donc de trouver une solution permettant de faciliter la fixation d'une conduite sur un bras d'essuyage.

A cet effet, il est proposé une attache pour fixer une conduite fluidique sur un bras d'essuyage d'un système de projection de véhicule automobile, ladite attache ayant une forme générale en V, la base du V formant un logement pour une portion de conduite fluidique, et comprenant un premier et un deuxième bras de retenue situés sur la première et la deuxième extrémités de la forme en V et s'entendant l'un vers l'autre, lesdits bras de retenue étant asymétriques dans une direction axiale destinée à être parallèle à la conduite fluidique de sorte que l'espace entre les deux bras de retenue forme une ouverture présentant une forme divergente selon la direction axiale.

Selon un aspect de la présente invention, l'extrémité des bras de retenue est rectiligne et présente un angle d'inclinaison compris entre 5 et 10° avec la direction axiale. Selon un autre aspect de la présente invention, l'écart entre les bras de retenue est compris entre 90 et 110 % de la largeur du bras d'essuyage au niveau de leur écartement maximal.

Selon un autre aspect de la présente invention, l'écart entre les bras de retenue est compris entre 70 et 90 % de la largeur du bras d'essuyage au niveau de leur écartement minimal.

Selon un autre aspect de la présente invention, les bras de retenue ont une forme biseautée sur leur côté externe pour faciliter l'insertion de l'attache sur le bras d'essuyage.

Selon un autre aspect de la présente invention, l'angle de la forme biseautée est compris entre 15 et 20°.

Selon un autre aspect de la présente invention, la forme générale en V présente des angles arrondis.

Selon un autre aspect de la présente invention, l'attache comprend deux excroissances disposées respectivement sur les deux parois internes de la forme en V et délimitant le logement destiné à recevoir la portion de conduite fluidique.

Selon un autre aspect de la présente invention, les excroissances s'étendent depuis les parois internes de la forme en V avec un angle compris entre 90 et 120° et ont une hauteur comprise entre 0,1 et 0,3 fois le diamètre de la conduite fluidique.

Selon un autre aspect de la présente invention, l'attache est réalisée en matériau plastique, en particulier en éthylène-propylène.

La présente invention concerne également un procédé de fixation d'une conduite fluidique sur un bras d'essuyage d'un système de projection de véhicule automobile, ledit procédé comprenant les étapes suivantes :
- on fournit au moins une attache telle que décrit précédemment,
- on place une portion de conduite fluidique dans un logement de la, au moins une, attache, en particulier soit en écartant les extrémités de la forme en V, soit en glissant la conduite fluidique dans le bas de la forme en V,
- on place la, au moins une, attache sur le bras d'essuyage en plaçant les bras de retenue contre le bras d'essuyage et en poussant l'attache vers le bras d'essuyage pour permettre l'insertion d'une portion du bras d'essuyage à l'intérieur de la forme en V.

D'autres caractéristiques et avantages de l'invention apparaîtront plus clairement à la lecture de la description suivante, donnée à titre d'exemple illustratif et non limitatif et des dessins annexés parmi lesquels :
[Fig.1] représente une vue schématique en perspective d'un exemple de réalisation d'une attache selon la présente invention.
[Fig.2] représente une vue schématique en perspective d'une attache positionnée autour d'une portion de conduite fluidique;
[Fig.3] représente une vue schématique en perspective du positionnement d'une attache sur un bras d'essuyage;
[Fig.4] représente un organigramme des différentes étapes d'un procédé de fixation d'une conduite fluidique sur un bras d'essuyage;

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

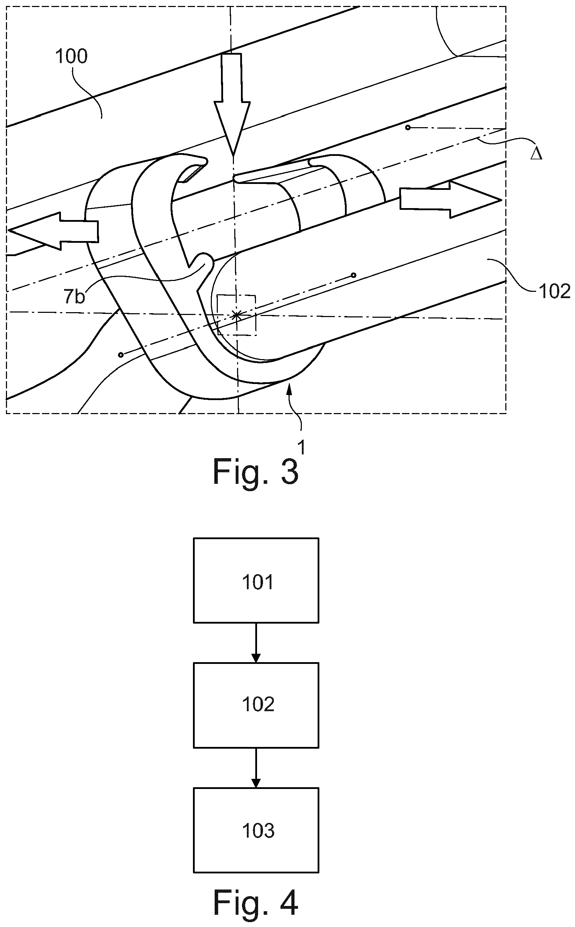

Des modes de mise en oeuvre et de réalisation de l'invention concernent une attache 1 pour un système de projection de liquide notamment pour véhicule automobile. Comme représenté sur la figure 3, l'attache 1 est destinée à permettre la fixation sur un bras d'essuyage 100 d'une conduite fluidique 102 permettant l'apport en liquide de lavage au niveau d'une buse de projection (non représentée) disposée sur le bras d'essuyage 100 et/ou sur le balai d'essuyage monté sur ledit bras d'essuyage 100.

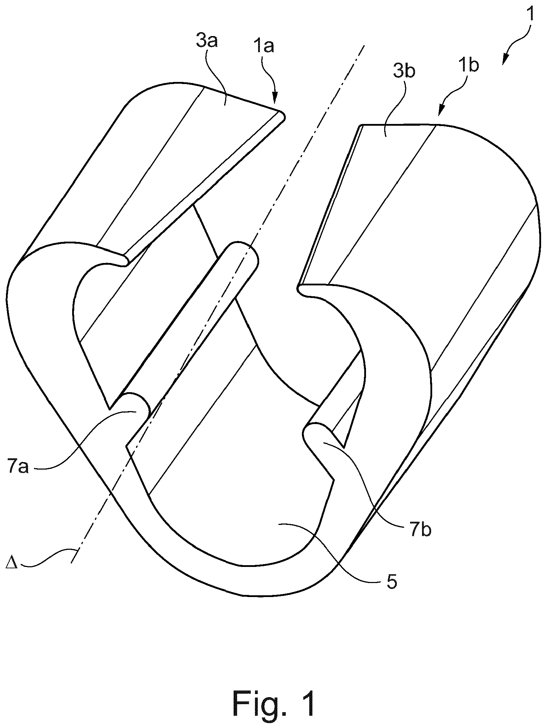

La figure représente une vue en perspective d'une attache de forme générale en V comprenant un premier bras de retenue 3a et un deuxième bras de retenue 3b situés respectivement sur la première extrémité 1a et la deuxième extrémité 1b de la forme en V et s'entendant l'un vers l'autre. L'espace entre les deux bras de retenue 3a et 3b forme une ouverture présentant une forme divergente selon la direction axiale de sorte que les bras de retenue 3a, 3b sont asymétriques dans cette direction axiale. La direction axiale, représenté par un axe Δ sur les figures correspond à une direction parallèle à la direction de la conduite fluidique 102 ou du bras d'essuyage 100 à l'état monté de l'attache 1 sur une portion de conduite fluidique 102 et/ou de bras d'essuyage 100. Dans l'exemple des figures 1 à 3, les extrémités des bras de retenue 3a, 3b sont rectilignes et présentent un angle compris entre 5 et 10° par rapport à la direction axiale mais d'autres formes non rectilignes mais présentant une divergence, par exemple des formes incurvées et notamment convexes, peuvent également être utilisées. La forme divergente formée par l'espace séparant les bras de retenue 3a, 3b permet de faciliter le montage de l'attache 1 sur le bras d'essuyage 100 et permet également un bon centrage de l'attache 1. L'écart entre les bras de retenue 3a, 3b au niveau de leur écartement maximal est par exemple compris entre 90 et 110 % de la largeur du bras d'essuyage 100 pour permettre une insertion et un positionnement facile de l'attache 1 sur la bras d'essuyage 100 et l'écart entre les bras de retenue 3a, 3b au niveau de leur écartement minimal est par exemple compris entre 70 et 90 % de la largeur du bras d'essuyage 100 pour permettre une fixation fiable de l'attache 1 sur le bras d'essuyage 100.

Les bras de retenue 3a, 3b peuvent également présenter une forme biseautée sur leur côté externe pour faciliter l'insertion de l'attache 1 sur le bras d'essuyage 100. L'angle de la forme biseautée est par exemple compris entre 15 et 20°.

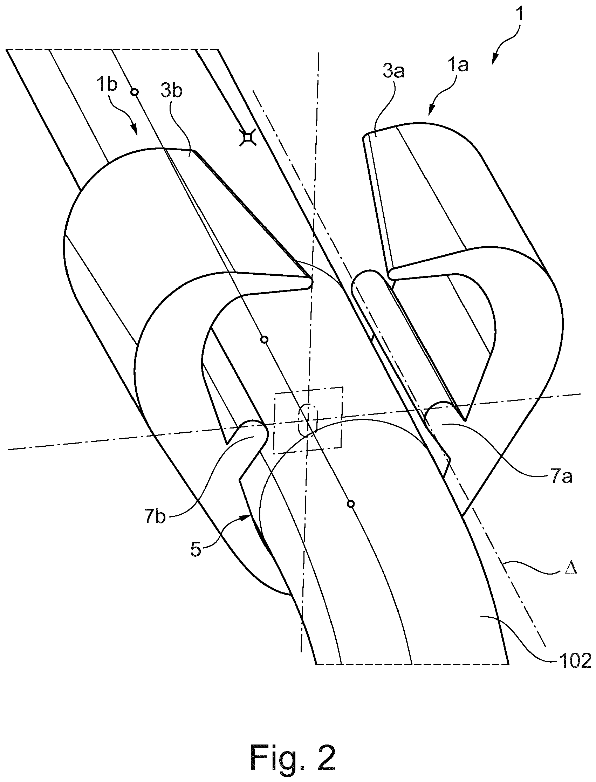

La base de la forme en V de l'attache 1 forme un logement 5 pour une portion de conduite fluidique 102. Des excroissances 7a, 7b peuvent être ménagées sur les parois internes de la forme en V pour délimiter ce logement et éviter toute interférence de la conduite fluidique 102 lors du montage de l'attache 1 sur le bras d'essuyage 100. Les excroissances 7a, 7b s'étendent par exemple avec un angle compris entre 90 et 120° (depuis les parois de la forme en V) et ont par exemple une hauteur comprise entre 0,1 et 0,3 fois le diamètre de la conduite fluidique 102 de manière à permettre une insertion aisée d'une portion de conduite fluidique 102 dans le logement 5 tout en assurant un maintien de cette portion dans le logement 5. L'extrémité des excroissances 7a, 7b peut être de forme arrondie. La figure 2 représente une vue schématique dans laquelle une portion de conduite fluidique 102 est positionnée dans le logement 5.

Les excroissances 7a et 7b peuvent en fonction du besoin soit permettre un glissement de la conduite fluidique soit un serrage de la conduite fluidique qui permettra de conserver l'agrafe en place sur ladite conduite fluidique.

Les différents angles de l'attache 1 et notamment les angles de la forme en V peuvent être arrondis comme sur le mode de réalisation des figures 1 à 3. De plus les épaisseurs des parois de l'attache 1 peuvent varier. La base de la forme en V peut présenter une paroi plus fine que les deux parois latérales pour procurer une élasticité permettant de pouvoir écarter facilement les deux extrémités de la forme en V. Les bras de retenue 3a, 3b peuvent également présenter une faible épaisseur pour faciliter le positionnement sur le bras d'essuyage 100.

De manière préférentielle, l'attache 1 est réalisée en matière plastique, notamment en éthylène-propylène.

La présente invention concerne également un procédé de fixation d'une conduite fluidique 102 sur un bras d'essuyage 100 d'un système de projection de véhicule automobile à l'aide d'une ou plusieurs attaches 1 telles que décrites précédemment. La figure 4 représente les différentes étapes du procédé.

La première étape 101 concerne la fourniture de la ou des attaches.

La deuxième étape 102 concerne le placement d'une portion de conduite fluidique 102 dans le logement 5 de l'attache 1 comme décrite ci-dessus, en particulier en écartant les extrémités de la forme en V ou en glissant la conduite fluidique dans la forme en V. L'écartement des extrémités de la forme en V peut être réalisée en positionnant l'attache 1 de sorte que l'ouverture de l'attache 1 située entre les bras de retenue 3a, 3b vienne en contact avec la conduite fluidique 102 puis en appuyant sur la partie externe de la base de la forme en V de l'attache 1 en direction de la conduite fluidique 102 pour permettre l'insertion de la conduite fluidique 102 dans l'attache 1 et en particulier dans le logement 5. La deuxième étape 102 se termine lorsque la portion de la conduite fluidique 102 est positionnée dans le logement 5 comme représenté sur la figure 2. La troisième étape 103 concerne le placement de l'attache 1 sur le bras d'essuyage 100 en plaçant les bras de retenue 3a, 3b contre le bras d'essuyage 100 et en poussant l'attache 1 vers le bras d'essuyage 100 pour permettre l'insertion d'une portion du bras d'essuyage 100 à l'intérieur de la forme en V, c'est-à-dire entre le logement 5 et les bras de retenue 3a, 3b, suite à l'écartement des extrémités de l'attache 1 comme représenté par les flèches sur la figure 3.

Dans le cas où la fixation nécessite plusieurs attaches 1, les étapes 102 et 103 peuvent être répétées pour chaque attache 1. L'ordre de ces étapes peut varier, il est par exemple possible de disposer toutes les attaches 1 sur la conduite hydraulique 102 puis de fixer les différentes attaches 1 sur le bras d'essuyage 100 ou de positionner les attaches 1 les unes après les autres sur la conduite hydraulique 102 et le bras d'essuyage 100.

## Revendications

1. Attache (1) pour fixer une conduite fluidique (102) sur un bras d'essuyage (100) d'un système de projection de véhicule automobile, ladite attache (1) ayant une forme générale en V, la base du V formant un logement (5) pour une portion de conduite fluidique (102), et comprenant un premier (3a) et un deuxième (3b) bras de retenue situés sur la première (1a) et la deuxième (1b) extrémités de la forme en V et s'entendant l'un vers l'autre, l'attache étant **caractérisée en ce que** lesdits bras de retenue (3a, 3b) sont asymétriques dans une direction axiale (Δ) destinée à être parallèle à la conduite fluidique (102) de sorte que l'espace entre les deux bras de retenue (3a, 3b) forme une ouverture présentant une forme divergente selon la direction axiale (Δ).

2. Attache (1) selon la revendication 1 dans laquelle l'extrémité des bras de retenue (3a, 3b) est rectiligne et présente un angle d'inclinaison compris entre 5 et 10° avec la direction axiale (Δ).

3. Attache (1) selon la revendication 1 ou 2 dans laquelle l'écart entre les bras de retenue (3a, 3b) est compris entre 90 et 110 %de la largeur du bras d'essuyage (100) au niveau de leur écartement maximal.

4. Attache (1) selon l'une des revendications précédentes dans laquelle l'écart entre les bras de retenue (3a, 3b) est compris entre 70 et 90 % de la largeur du bras d'essuyage (102) au niveau de leur écartement minimal.

5. Attache (1) selon l'une des revendications précédentes dans laquelle les bras de retenue (3a, 3b) ont une forme biseautée sur leur côté externe pour faciliter l'insertion de l'attache (1) sur le bras d'essuyage (100).

6. Attache (1) selon la revendication 5 dans laquelle l'angle de la forme biseautée est compris entre 15 et 20°.

7. Attache (1) selon l'une des revendications précédentes dans laquelle la forme générale en V présente des angles arrondis.

8. Attache (1) selon l'une des revendications précédentes comprenant deux excroissances (7a, 7b) disposées respectivement sur les deux parois internes de la forme en V et délimitant le logement (5) destiné à recevoir la portion de conduite fluidique (102).

9. Attache (1) selon la revendication 6 dans laquelle les excroissances (7a, 7b) s'étendent depuis les parois internes de la forme en V avec un angle compris entre 90 et 120° et ont une hauteur comprise entre 0,1 et 0,3 fois le diamètre de la conduite fluidique (102).

10. Procédé de fixation d'une conduite fluidique (102) sur un bras d'essuyage (100) d'un système de projection de véhicule automobile, ledit procédé comprenant les étapes suivantes :
- on fournit au moins une attache (1) selon l'une des revendications précédentes,
- on place une portion de conduite fluidique (102) dans un logement (5) de la, au moins une, attache (1), en particulier soit en écartant les extrémités (1a, 1b) de la forme en V soit en glissant la conduite fluidique dans le bas de la forme en V
- on place la, au moins une, attache (1) sur le bras d'essuyage (100) en plaçant les bras de retenue (3a, 3b) contre le bras d'essuyage (100) et en poussant l'attache (1) vers le bras d'essuyage (100) pour permettre l'insertion d'une portion du bras d'essuyage (100) à l'intérieur de la forme en V.

## Patentansprüche

1. Clip (1) zum Befestigen einer Flüssigkeitsleitung (102) an einem Wischerarm (100) eines Projektionssystems eines Kraftfahrzeugs, wobei der Clip (1) eine annähernde V-Form aufweist, wobei der untere Teil des "V" eine Aufnahme (5) für einen Abschnitt der Flüssigkeitsleitung (102) bildet, und einen ersten (3a) und einen zweiten (3b) Haltearm umfasst, die sich am ersten (1a) und am zweiten (1b) Ende der V-Form befinden und sich aufeinander zu erstrecken, wobei der Clip **dadurch gekennzeichnet ist, dass** die Haltearme (3a, 3b) asymmetrisch in einer axialen Richtung (Δ) sind, die dazu bestimmt ist, parallel zu der Flüssigkeitsleitung (102) zu sein, und zwar derart, dass der Zwischenraum zwischen den beiden Haltearmen (3a, 3b) eine Öffnung bildet, die eine in der axialen Richtung (Δ) divergente Form aufweist.

2. Clip (1) nach Anspruch 1, wobei das Ende der Haltearme (3a, 3b) gerade ist und einen Neigungswinkel zwischen 5 und 10° mit der axialen Richtung (Δ) aufweist.

3. Clip (1) nach Anspruch 1 oder 2, wobei die Entfernung zwischen den Haltearmen (3a, 3b) im Bereich ihres maximalen Abstands zwischen 90 und 110 % der Breite des Wischerarmes (100) beträgt.

4. Clip (1) nach einem der vorhergehenden Ansprüche, wobei die Entfernung zwischen den Haltearmen (3a, 3b) im Bereich ihres minimalen Abstands zwischen 70 und 90 % der Breite des Wischerarmes (102) beträgt.

5. Clip (1) nach einem der vorhergehenden Ansprüche, wobei die Haltearme (3a, 3b) auf ihrer Außenseite eine abgeschrägte Form aufweisen, um die Anbringung des Clips (1) am Wischerarm (100) zu erleichtern.

6. Clip (1) nach Anspruch 5, wobei der Winkel der abgeschrägten Form zwischen 15 und 20° beträgt.

7. Clip (1) nach einem der vorhergehenden Ansprüche, wobei die annähernde V-Form abgerundete Ecken aufweist.

8. Clip (1) nach einem der vorhergehenden Ansprüche, welcher zwei Vorsprünge (7a, 7b) umfasst, die jeweils an einer der zwei Innenwände der V-Form angeordnet sind und die Aufnahme (5) begrenzen, die dazu bestimmt ist, den Abschnitt der Flüssigkeitsleitung (102) aufzunehmen.

9. Clip (1) nach Anspruch 6, wobei die Vorsprünge (7a, 7b) sich von den Innenwänden der V-Form aus unter einem Winkel zwischen 90 und 120° erstrecken und eine Höhe aufweisen, die zwischen dem 0,1- und dem 0,3-Fachen des Durchmessers der Flüssigkeitsleitung (102) liegt.

10. Verfahren zur Befestigung einer Flüssigkeitsleitung (102) an einem Wischerarm (100) eines Projektionssystems eines Kraftfahrzeugs, wobei das Verfahren die folgenden Schritte umfasst:
- es wird mindestens ein Clip (1) nach einem der vorhergehenden Ansprüche bereitgestellt,
- es wird ein Abschnitt der Flüssigkeitsleitung (102) in einer Aufnahme (5) des mindestens einen Clips (1) angebracht, insbesondere entweder durch Auseinanderbewegen der Enden (1a, 1b) der V-Form oder durch Einschieben der Flüssigkeitsleitung in den unteren Teil der V-Form,
- der mindestens eine Clip (1) wird am Wischerarm (100) angebracht, indem die Haltearme (3a, 3b) an den Wischerarm (100) angelegt werden und indem der Clip (1) in Richtung des Wischerarmes (100) gedrückt wird, um das Einsetzen eines Abschnitts des Wischerarmes (100) ins Innere der V-Form zu ermöglichen.

## Claims

1. A clip (1) for attaching a fluidic pipe (102) to a wiper arm (100) of a spraying system for a motor vehicle, said clip (1) having the overall shape of a V, the base of the V forming a receptacle (5) for a portion of the fluidic pipe (102) and comprising a first holding arm (3a) and a second holding arm (3b) that are located at the first end (1a) and the second end (1b) of the V shape and extend toward one another, said holding arms (3a, 3b) being asymmetrical in an axial direction intended to be parallel to the fluidic pipe (102) such that the space between the two holding arms (3a, 3b) forms an opening having a divergent shape in the axial direction (Δ).

2. The clip (1) as claimed in claim 1, wherein the end of the holding arms (3a, 3b) is rectilinear and has an angle of inclination of between 5 and 10° with the axial direction (Δ).

3. The clip (1) as claimed in claim 1 or 2, wherein the distance between the holding arms (3a, 3b) is between 90% and 110% of the width of the wiper arm (100) at their maximum spacing.

4. The clip (1) as claimed in one of the preceding claims, wherein the distance between the holding arms (3a, 3b) is between 70% and 90% of the width of the wiper arm (102) at their minimum spacing.

5. The clip (1) as claimed in one of the preceding claims, wherein the holding arms (3a, 3b) have a beveled shape on their outer side to facilitate the insertion of the clip (1) on the wiper arm (100).

6. The clip (1) as claimed in claim 5, wherein the angle of the beveled shape is between 15 and 20°.

7. The clip (1) as claimed in one of the preceding claims, wherein the overall V shape has rounded angles.

8. The clip (1) as claimed in one of the preceding claims, comprising two protuberances (7a, 7b) that are disposed respectively on the two inner walls of the V shape and delimit the receptacle (5) intended to receive the portion of the fluidic pipe (102).

9. The clip (1) as claimed in claim 6, wherein the protuberances (7a, 7b) extend from the inner walls of the V shape at an angle of between 90 and 120° and have a height of between 0.1 and 0.3 times the diameter of the fluidic pipe (102).

10. A method for attaching a fluidic pipe (102) to a wiper arm (100) of a spraying system for a motor vehicle, said method comprising the following steps:
- providing at least one clip (1) as claimed in one of the preceding claims,
- placing a portion of a fluidic pipe (102) in a receptacle (5) of the at least one clip (1), in particular either by spacing apart the ends (1a, 1b) of the V shape or by sliding the fluidic pipe into the bottom of the V shape,
- placing the at least one clip (1) on the wiper arm (100) by placing the holding arms (3a, 3b) against the wiper arm (100) and by pushing the clip (1) toward the wiper arm (100) to make it possible to insert a portion of the wiper arm (100) inside the V shape.
